# EUROPÄISCHE PATENTSCHRIFT

(11) **EP 1 163 818 B1**
(45) Veröffentlichungstag und Bekanntmachung des Hinweises auf die Patenterteilung: **25.08.2004**
(21) Anmeldenummer: 00920407.4
(22) Anmeldetag: 22.03.2000
(51) Int. Cl.: H04Q 7/38, H04B 7/26

(54) **VERFAHREN UND BASISSTATION ZUR KANALZUWEISUNG FÜR EINE FUNKÜBERTRAGUNG**
METHOD AND BASE STATION FOR ALLOCATING A CHANNEL REQUIRED FOR A RADIO TRANSMISSION
PROCEDE ET STATION DE BASE PERMETTANT D'ATTRIBUER UN CANAL A UNE TRANSMISSION RADIO

(30) Priorität: 23.03.1999 DE 19913086
(43) Veröffentlichungstag der Anmeldung: 19.12.2001
(73) Patentinhaber: SIEMENS AKTIENGESELLSCHAFT, 80333 München (DE)
(72) Erfinder: SCHULZ, Egon, D-80993 München (DE)
(86) Internationale Anmeldenummer: PCT/DE2000/000885
(87) Internationale Veröffentlichungsnummer: WO 2000/057660

(56) Entgegenhaltungen:
- WO-A-99/49684
- DE-A- 19 543 253

## Beschreibung

Die Erfindung betrifft ein Verfahren und eine Basisstation zur Kanalzuweisung für eine Funk-Übertragung zwischen einer Teilnehmerstation und einer Basisstation in insbesondere Mobilfunksystemen.

In einem GSM-System (Global System for Mobile Communications) wird eine Kombination aus Frequenzvielfachzugriff (FDMA) und Zeitvielfachzugriff (TDMA) eingesetzt. Das zur Verfügung stehende Frequenzband ist nach einem Frequenzduplexverfahren (FDD) in ein Uplink-Band (890 MHZ - 915 MHz) und ein Downlink-Band (935 MHz - 960 MHz) mit einem Bandabstand von 45 MHZ aufgeteilt. Jedes dieser Bänder ist in 124 einzelne Frequenzkanäle im 200-kHz-Abstand unterteilt. Jeder Frequenzkanal ist eindeutig numeriert und jeweils ein Paar gleicher Nummern aus dem Uplink-Band und dem Downlink-Band bildet einen Duplexkanal mit festem 45-MHz-Duplexabstand. Dies ist die FDMA-Komponente. Innerhalb eines jeden Frequenzkanals wird ein TDMA-Verfahren mit 8 Zeitschlitze pro Zeitschlitzrahmen verwendet, wobei die Zeitschlitzrahmen des Uplink-Bandes zur Verringerung des Schaltungsaufwandes mit drei Zeitschlitzen Verzögerung gegenüber den Zeitschlitzrahmen des Downlink-Bandes gesendet werden. Eine Teilnehmerstation verwendet im Uplink-Band und im Downlink-Band jeweils den Zeitschlitz mit der gleichen Zeitschlitznummer (TN). Entsprechendes gilt auch für die erweiterten GSM-Frequenzbänder und für DCS 1800 (Digital Communication System 1800).

In jedem Zeitschlitz eines Zeitschlitzrahmens werden Datenbursts gleicher Länge gesendet. Ein Normalburst (NB) enthält fehlerschutzcodierte und verschlüsselte Nutzdaten, symmetrisch getrennt durch eine sogenannte Mittambel (MA) zur Schätzung der Kanaleigenschaften und entsprechenden Kanalentzerrung. Die Zeitschlitznummer, die Mittambelnummer und der Kanaltyp (Steuerkanal, Verkehrskanal..) gelten im GSM-System sowohl für das Uplink-Band als auch für das Downlink-Band, siehe z.B. die DE-A-19 543 253.

Dies bedeutet, in einem GSM-System ist durch eine Kanalbeschreibung der einer Teilnehmerstation zugeordnete logische bzw. physikalische Kanal auch ohne Aussage über Uplink oder Downlink eindeutig im Uplink-Band und im Downlink-Band festgelegt.

Im Falle der Verwendung eines optional anwendbaren Frequenzspringens (Frequenzy Hopping), bei dem während der Übertragung periodisch die Frequenz gewechselt wird, um frequenzselektive Störungen auszugleichen, gelten die Frequenzsprungparameter ebenfalls für das Uplink-Band und das Downlink-Band.

Im Gegensatz zum GSM-System wird bei einem DECT-System (Digital Enhanced Cordless Telephone), das gleichfalls eine Kombination von FDMA und TDMA auf der Funkschnittstelle verwendet, das gesamte zur Verfügung stehenden Frequenzband (zwischen 1880 MHz und 1990 MHZ) in beiden Richtungen benutzt, wobei zur Trennung in Uplink und Downlink in unterschiedlichen Zeitlagen gesendet und empfangen wird. Man spricht hier von einem TDD-Modus (Zeitduplex). Nach dem DECT-Standard sind die ersten 12 Zeitschlitze eines DECT-Rahmens für den Downlink und die zweiten 12 Zeitschlitze des DECT-Rahmens für den Uplink vorgesehen und zwischen Uplink und Downlink einer Sprachverbindung ist immer ein Abstand von 12 Zeitschlitzen vorhanden. Diese 12 Zeitschlitze entsprechen einer Zeitdauer von 5 ms, weil das DECT-System mit einem festen Umschaltpunkt (Switching Point) zwischen Downlink und Uplink arbeitet. Fordert eine DECT-Teilnehmerstation einen Sprachkanal (Full Slot) auf einem bestimmten Zeitschlitz, zum Beispiel Zeitschlitz 18 und auf einer bestimmten Frequenz fx an, dann ist der Uplink-Kanal nach dem DECT-Standard eindeutig festgelegt. Der Uplink-Kanal befindet sich auf der gleichen Frequenz fx und auf dem Zeitschlitz 6 (18-12).

Kommende Funk-Kommunikationssysteme wie UMTS (Universal Mobile Telecommunication System), das unter anderem eine Übertragungskapazität entsprechend dem ISDN für Dienste wie Bildfernsprechen und Breitbandverbindungen anbieten wird und im folgenden zur Darstellung des technischen Hintergrundes der Erfindung dienen soll, ohne die Allgemeinheit des Einsatzes der Erfindung einzuschränken, basieren auf der Trennung der Übertragungskanäle durch Spreizcodes. Bezeichnend für ein Codevielfachzugriffsverfahren (CDMA) ist die Übertragung eines schmalbandigen Funksignals in einem breiten Frequenzspektrum, wobei das schmalbandige Signal durch eine geignete Codiervorschrift auf ein breitbandiges Signal gespreizt wird. Im UMTS-System sind zwei Modi vorgesehen, der FDD-Modus und der TDD-Modus. Beim FDD-Modus handelt es sich um ein Breitband-CDMA, charakterisiert durch die Freiheitsgrade Frequenz und Spreizcode und beim TDD-Modus um ein TD/CDMA-Verfahren, charakterisiert durch die Freiheitsgrade Frequenz, Zeitschlitz und Spreizcode. Bei letzterem wird der Vielfachzugriff durch ein Breitband-TDMA/FDMA-System realisiert, wobei in bestimmten Zeitschlitzen eines Zeitschlitzrahmens wiederum ein Vielfachzugriff nach dem CDMA-Verfahren erlaubt ist. Im TDD-Modus sind ein oder mehrere variable Umschaltpunkte zwischen Uplink und Downlink innerhalb eines Zeitschlitzrahmens vorgesehen, um die knappen Frequenzressourcen besser zu verwalten.

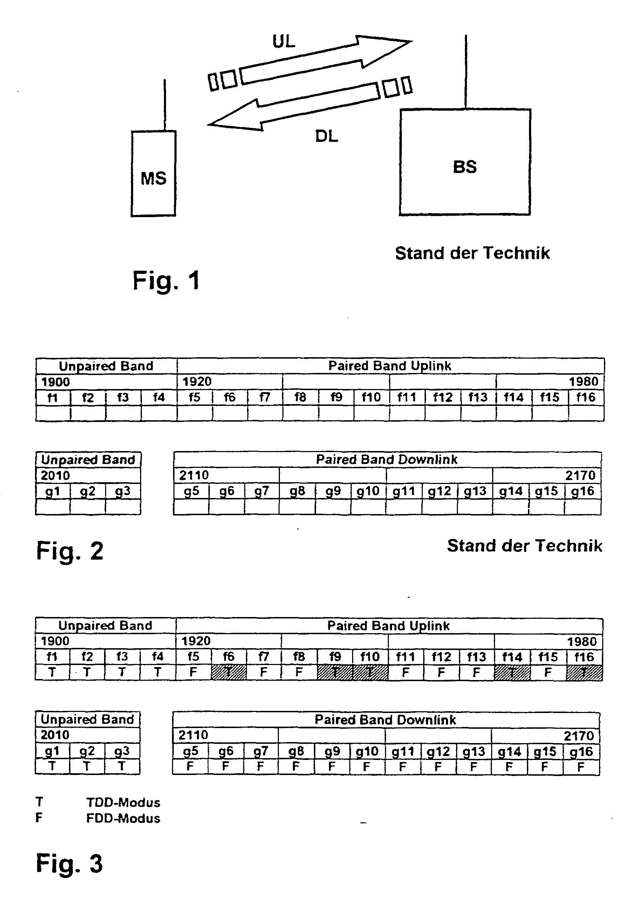

Im UMTS-System sind unterschiedliche Frequenzbänder vorgesehen, Unpaired-Bänder und Paired-Bänder. Die Unpaired-Bänder sind aus heutiger Sicht für den TDD-Modus und die Paired-Bänder exclusiv für den FDD-Modus reserviert. Das eine Unpaired-Band liegt im Frequenzbereich 1900 MHz bis 1920 MHz und das andere Unpaired-Band liegt im Frequenzbereich 2010 MHz bis 2025 MHz. Das Uplink-Band des Paired-Band liegt im Frequenzbereich 1920 MHz bis 1980 MHz und das Downlink-Band des Paired-Bandes liegt im Bereich von 2110 MHz bis 2170 MHz. Das Duplexband hat somit einen Duplexabstand von 190 MHz. Die Frequenzbänder sind in Frequenzen zu je 5-MHz-Bandbreite aufgeteilt. Somit haben die Unpaired-Bänder vier und drei Frequenzen und das Paired-Band 12 Uplink-Frequenzen und 12 Downlink-Frequenzen. Fig. 3 gibt eine Darstellung der Frequenzbänder und ihre Aufteilung.

Bei einer Anforderung von symmetrischen Diensten, wie zum Beispiel Circuit Switched-Diensten mit Datenraten von 64 kBit/s, 144 kbit/s oder höher (Echtzeit-Dienst) oder auch Sprach-Diensten müssen im Downlink-Band die gleichen Datenraten wie im Uplink-Band übertragen werden.

Bei asymmetrischer Auslastung des Paired-Bandes hingegen wird in der Regel das Downlink-Band stark und das Uplink-Band nur geringfügig belastet. Dies ist besonders bei Datenbankabfragen wie zum Beispiel aus dem Internet zu erwarten. Bei asymmetrischen Datendiensten geht man davon aus, daß eine hohe Datenrate im Downlink und eine kleine Datenrate im Uplink gefordert wird. Dieser Sachverhalt kann natürlich auch umgekehrt auftreten, zum Beispiel beim Senden eines Faxes von einer Teilnehmerstation aus.

Hierzu wurde bereits vorgeschlagen, auch im Uplink-Band des Paired-Bandes von UMTS ein TDD-Modus zuzulassen, wodurch insgesamt eine höhere Kapazitätsauslastung der Frequenzressourcen erzielbar sein soll. Damit wird ein neues Protokoll für eine eindeutige Kanalbeschreibung notwendig, das in den Teilnehmerstationen und den Basisstationen gleichermaßen implementiert werden muß.

Der Erfindung liegt deshalb die Aufgabe zugrunde, eine effiziente Beschreibung der Kanäle mit geringem Signalisierungsaufwand vorzunehmen.

Diese Aufgabe wird mit dem Verfahren gemäß Anspruch 1 und der Basisstation gemäß Anspruch 8 gelöst. Vorteilhafte Aus- und Weiterbildungen der Erfindung sind Gegenstand der abhängigen Ansprüche.

Das Verfahren zur Kanalzuweisung für eine Funkübertragung zwischen einer Teilnehmerstation und einer Basisstation eines Funkkommunikationssystems sieht vor, dass
- der Teilnehmerstation für die Funkübertragung mehrere Kanalressourcen durch eine an sie übermittelte, gemeinsame Kanalbeschreibung eindeutig zugewiesen werden
- und die Kanalbeschreibung Angaben zur Reihenfolge der Nutzung der Kanalressourcen während der Funkübertragung enthält.

Nach einer Weiterbildung der Erfindung ist vorgesehen, dass die Reihenfolge der Kanalressourcennutzung durch die Reihenfolge der Angaben der einzelnen Kanalressourcen innerhalb der Kanalbeschreibung angegeben wird.

Da zum einen mit einer Aufteilung des Paired-Bandes in FDD und TDD der feste Duplexabstand zwischen dem Uplink-Band und dem Downlink-Band im FDD-Modus aufgehoben wird und zum anderen hinsichtlich einer gleichzeitigen Unterstützung von symmetrischen und asymmetrischen Diensten im TDD-Modus jede feste Zuordnung der Zeitschlitze zu Downlink und Uplink innerhalb eines Zeitschlitzrahmens aufgehoben ist, müssen für eine Kanalzuweisung stets der Downlink-Kanal und der Uplink-Kanal hinsichtlich ihrer Lage und ihres Abstandes eindeutig in einer Kanalbeschreibung festgelegt werden, unabhängig von der verwendeten Übertragungsressource.

Hierzu werden in einer Ausgestaltung der Erfindung in einem gemeinsamen Informationselement der Uplink-Kanal und der Downlink-Kanal nacheinander beschrieben und innerhalb einer Systeminformation im Dedicatet Control Channel (DCCH) von der Basisstation an eine Teilnehmerstation gesendet. Nach einer weiteren Ausgestaltung werden für den Uplink-Kanal und den Downlink-Kanal zwei Informationselemente angelegt und getrennt übertragen. Nach einer weiteren Ausgestaltung erfolgt eine Kanalzuweisung durch Beschreibung nur eines Kanals, wenn nämlich zum Beispiel der Uplink-Kanal und der Downlink-Kanal sich nur durch die Zeitschlitznummer unterscheiden und alle anderen Parameter identisch sind. Nach einer weiteren Ausbildung wird eine Beschreibung beider Kanäle in einem gemeinsamen Informationselementes vorgenommen und durch ein Flag angezeigt, was für den Uplink-Kanal und was für den Downlink-Kanal gilt. Dies entspricht einem neuen Übertragungsparameter UL/DL innerhalb der System Information Message. Eine weitere erfindungsgemäße Kanalbeschreibung ist so organisiert, daß ein Informationselement den Uplink-Kanal beschreibt, wohingegen der Downlink-Kanal durch einen neuen Übertragungsparameter beschrieben wird. In Blickrichtung auf Multicarrier Mehrfrequenz-Mobilfunksystemen werden in weiterer Ausprägung die Frequenzabstände zwischen Uplink-Kanal und Downlink-Kanal in einem Informationselement angegeben. Für den Fall, daß beispielsweise zum Zwecke einer Echtzeit-Datenübertragung in einer Richtung dem Nutzer mehr als nur ein physikalischer Kanal zur Verfügung gestellt werden soll, wird in einer weiteren Ausbildung in der Kanalbeschreibung eindeutig festgelegt, in welcher Reihenfolge die Kanäle zu benutzen sind. Die Reihenfolge der Kanalbenutzung kann in Untersetzung dieses Vorschlags anhand der Zeitschlitz-Nummer, durch die Angabe des betreffenden Spreizcodes oder auch durch die Angabe der Frequenz erfolgen.

Bei einem Kanalwechsel kann auch entweder nur der Downlink-Kanal oder nur der Uplink-Kanal gewechselt werden, weshalb erfindungsgemäß in diesen Fällen lediglich eine Kanalbeschreibung nur für den Downlink-Kanal oder nur für den Uplink-Kanal vorgesehen wird und nicht für beide Richtungen gleichzeitig.

Ferner kann erfindungsgemäß die Kanalbeschreibung für FDD und TDD auch kombiniert werden, beispielsweise eine Kanalbeschreibung für den Uplink-Kanal im FDD-Modus mit einer Kanalbeschreibung für den Downlink im TDD-Modus.

Die Erfindung soll nachstehend anhand von Ausführungsbeispielen für das UMTS-System näher erläutert werden. In der zugehörigen Zeichnung zeigen
Fig. 1: Eine allgemeine Darstellung einer Funkschnittstelle in einem Funk-Kommunikationssystem,
Fig. 2: Eine Darstellung der Frequenzbänder im UMTS-System,
Fig. 3: Eine beispielhafte Frequenzbandaufteilung im Paired-Band,
Fig. 4: Einen Zeitschlitzrahmen mit einem variablen Umschaltpunkt zwischen Uplink und Downlink,
Fig. 5: Ein Zeitschlitzrahmen mit mehreren Umschaltpunkten und CDMA-Vielfachzugriff,
Fig. 6: Parameter einer Kanalbeschreibung ohne Verwendung eines Frequenzsprungsverfahrens im TDD-Modus von UMTS,
Fig. 7: Eine allgemeine Darstellung einer Kanalbeschreibung nach Fig. 6 durch zwei Informationselemente innerhalb einer Systeminformation,
Fig. 8: Eine Variante zur Kanalbeschreibung mit einem gemeinsamen Informationselement für beide Kanalrichtungen,
Fig. 9: Eine weitere Variante zur Kanalbeschreibung mit nur einem Informationselement unter Setzung eines Flags,
Fig. 10: Eine weitere Variante einer Kanalbeschreibung mit nur einem Informationselement unter festem Bezug auf Uplink und Downlink,
Fig. 11: Eine allgemeine Kanalbeschreibung für einen Uplink-Kanal,
Fig. 12: Eine verkürzte Kanalbeschreibung nach Fig. 11 für Kanäle, die sich nur im Spreizcode unterscheiden,
Fig. 13: Eine allgemeine Kanalbeschreibung für einen Downlinkkanal,
Fig. 14: Parameter für eine Kanalbeschreibung im FDD-Modus von UMTS und
Fig. 15: Eine Variante einer Kanalbeschreibung anhand zweier Informationselemente für jeden Kanal im FDD-Modus von UMTS.

In einem als Beispiel für ein Funk-Kommunikationssystem dienendes UMTS-Mobilfunknetz kommunizieren nach Fig. 1 eine Teilnehmerstation MS und eine übergeordnete Basisstation BS, die als Beispiel für eine Station einer Funkzelle, eines Sektors einer Funkzelle oder eines Netzwerkes selbst gebraucht werden soll, über eine Funkschnittstelle Downlink DL und Uplink UL entweder im TDD- oder im FDD-Modus von UMTS. Die Basisstation BS kann über eine weitere, nicht dargestellte Funkschnittstelle eine Verbindung zu einer anderen Teilnehmerstation MS, zum Beispiel einer Mobilstation oder einem anderweitigen mobilen oder stationären Endgerät, aufbauen.

In Fig. 3 ist eine beispielhafte Bandaufteilung für ein Frequenzband nach Fig. 2 (Stand der Technik) angegeben. Danach sind 5 Frequenzen des Uplink-Paired-Bandes anstelle für FDD für TDD freigegeben, nämlich die Frequenzen f6, f9, f10, f14 und f15. Während die maximal mögliche Datenrate für den Downlink im FDD-Modus erhalten bleibt, verringert sich diese für den Uplink. Dies bleibt bei asymmetrischer Nutzung von Datendiensten im FDD-Modus, die häufig eine höhere Bitrate für den Downlink als für den Uplink verlangen, beispielsweise während eines Datentransfers aus dem Internet, ohne spürbare Folgen. Dafür werden in dieser Zeit anstatt 7 Frequenzen nunmehr 12 Frequenzen für die Nutzung von TDD bereitgestellt, was bedeutet, daß das zur Verfügung stehende Frequenzband insgesamt besser ausgelastet werden kann.

Allerdings wird durch eine solche oder anderweitige Aufteilung der Kanäle in FDD und TDD der feste Duplexabstand der FDD-Kanäle im Paired-Band zwischen Uplink und Downlink aufgehoben, weshalb ein Downlink-Kanal und ein Uplink-Kanal bei einer Zuweisung bezüglich ihres Frequenzabstandes spezifiziert werden müssen. Ebenso ist eine Spezifizierung im TDD-Modus hinsichtlich der gleichzeitigen Unterstützung von symmetrischen und asymmetrischen Diensten notwendig.

Der TDD-Modus arbeiten mit einer Zeitschlitzstruktur, wobei ein Zeitschlitzrahmen mit einer Rahmendauer von 10 ms in 16 Zeitschlitze unterteilt ist. Auf jedem der Zeitschlitze werden die Teilnehmer durch unterschiedliche Spreizcodes (CDMA-Komponente) unterschieden. Im TDD-Modus sind 16 Spreizcodes vorgesehen.

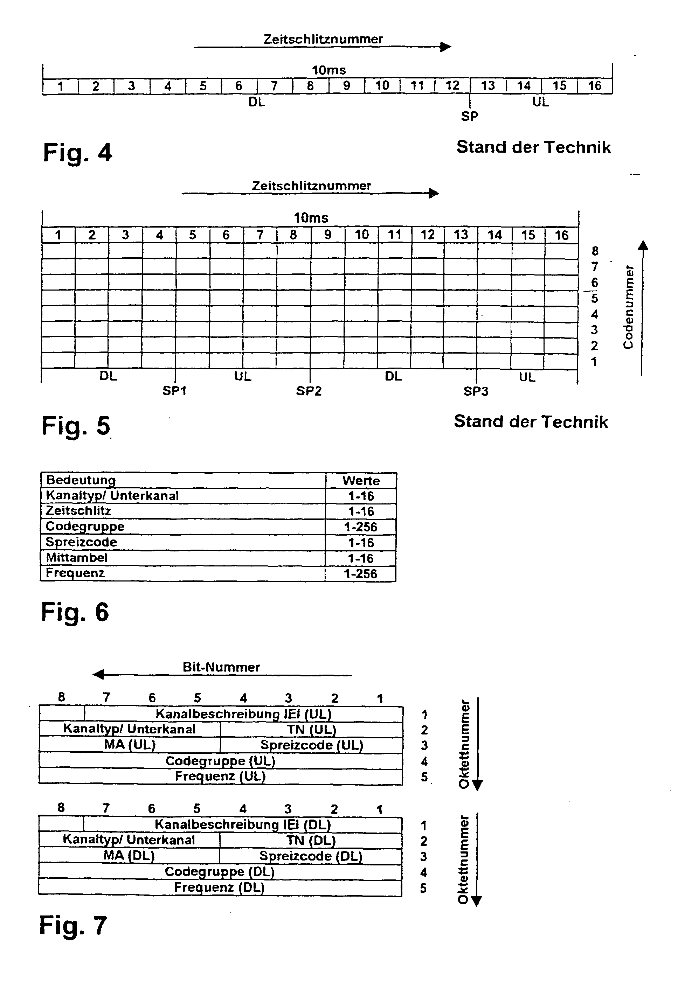

Ein wesentlicher Vorteil des TDD-Modus ist der variable Umschaltpunkt (Switching Point) zwischen Downlink und Uplink innerhalb eines Zeitschlitzrahmens. Mit dem variablen Umschaltpunkt lassen sich die zur Verfügung stehenden Resourcen für asymmetrische Dienste effizienter einsetzen. Man kann beispielsweise den Umschaltpunkt so einstellen, daß 12 Zeitschlitze des Zeitschlitzerahmens für den Downlink DL zur Verfügung stehen und die restlichen 4 Zeitschlitze für den Uplink UL (Fig. 4). Unter Abzug von 2 Zeitschlitzen für Kontrollkanäle stünden damit noch insgesamt 14 Zeitschlitze für Verkehrskanäle zur Verfügung, von denen 11 Zeitschlitze dem Downlink und 3 Zeitschlitze dem Uplink zugeordnet werden könnten. In diesem Falle kann der TDD-Modus höhere Datenraten in Downlink-Richtung als in Uplink-Richtung unterstützen. Der Umschaltpunkt SP kann vom Netzwerk per "Bedienung und Wartung" eingestellt werden oder auch automatisch entsprechend dem aktuellen Verkehrsaufkommen variiert werden.

Es ist auch möglich, mehrere Umschaltpunkte innerhalb eines Zeitschlitzrahmens vorzusehen. In Fig. 5 sind 3 Umschaltpunkte SP1, SP2, SP3 dargestellt. Außerdem ist dargestellt, daß jeder Zeitschlitz ts 16 Kanäle unterstützt, die sich durch unterschiedliche Spreizcodes 1 bis 16 unterscheiden lassen. Durch die Flexibilität der Umschaltpunkte ist jede starre Relation zwischen den Zeitschlitzen ts, wie sie etwa im DECT-System herrscht, aufgehoben.

Ein System mit 3 Umschaltpunkten innerhalb eines Zeitschlitzrahmens nach Fig. 5 soll näher betrachtet werden. Wird einer Teilnehmerstation MS für eine Sprachverbindung der Uplink-Zeitschlitz 15 zugeordnet, dann kann der Downlink-Zeitschlitz entweder aus dem Bereich Zeitschlitz 1 bis 4 oder aus dem Bereich Zeitschlitz 9 bis 13 der Teilnehmerstation MS zugeordnet werden. Diese Zeitschlitze ts sind entweder weniger als 8 Zeitschlitze oder mehr als 8 Zeitschlitze vom Zeitschlitz 15 entfernt, wobei 8 Zeitschlitze einer Dauer von 5 ms entsprechen, also der Hälfte der Rahmendauer eines 10-ms-Zeitschlitzrahmens. Daraus ist zu schließen, daß bei einem variablen Umschaltpunkt SP bei der Kanalzuweisung der Uplink- und der Downlink-Kanal eindeutig festgelegt werden müssen.

In Fig. 6 sind die Parameter für eine Kanalbeschreibung im TDD-Modus von UMTS ohne Frequenzspringen näher bezeichnet. Mit Werten für den Typ des logischen Kanals/Unterkanals, für die Zeitschlitznummer TN, für die Codegruppe, für den Spreizcode, für die Mittambel MA und für die Frequenz f läßt sich ein spezifischer physikalischer Kanal genau definieren.

Im Falle der Verwendung eines Frequenzsprungverfahrens werden in der Kanalbeschreibung die Frequenzliste, die Sprungsequenznummer und das Mobile Allocation Index Offset (MAIO) angegeben. Weiterhin besteht die Möglichkeit, daß die Parameter für Uplink und für Downlink ebenfalls unterschieden werden.

Die konkreten Parameter einer Kanalbeschreibung bei Anforderung eines Sprachkanals lauten beispielsweise:

| Uplink | Kanaltyp | Vollraten-Verkehrskanal, Sprache |
|---|---|---|
| | Zeitschlitz | 15 |
| | Codegruppe | 5 |
| | Spreizcode | 10 |
| | Mittambel | 7 |
| | Frequenz | 3 |

| Downlink | Kanaltyp | Vollraten-Verkehrskanal, Sprache |
|---|---|---|
| | Zeitschlitz | 10 |
| | Codegruppe | 5 |
| | Spreizcode | 10 |
| | Mittambel | 7 |
| | Frequenz | 3. |

In einer ersten Ausgestaltung der Erfindung werden in zwei getrennten optionalen Informationselementen IEI der Uplink-Kanal und der Downlink-Kanal nacheinander beschrieben und innerhalb einer Information im Dedicated Control Channel (DCCH) von der Basisstation an eine Teilnehmerstation übertragen.

In einem ersten Informationselement IEI wird eine Kanalbeschreibung für den Uplink-Kanal UL und in einem zweiten Informationselement IEI eine Kanalbeschreibung für den Downlink-Kanal DL vorgenommen.

Fig. 7 gibt das identische Format der Informationselemente IEI(UL) und IEI(DL) als Teil einer Nachricht des DCCH in strukturierter Form wieder. Eine Nachricht ist ein aus mehreren Bits aufgebauter Block zusammengehörender Daten. Jeweils 8 Bit werden zu einem Oktett zusammengefaßt. Oktette bilden damit die Elemente, aus denen eine Nachricht aufgebaut ist.

Im ersten Oktett enthalten die Bits 1 bis 7 den Nachrichtentyp, nämlich: Informationselemente IEI zur getrennten Kanalbeschreibung im Uplink UL bzw. im Downlink DL. Bit 8 ist frei. Im zweiten Oktett geben die Bits 1 bis 4 die Zeitschlitznummer TN im Uplink UL bzw. Downlink DL an, die Bits 5 bis 8 den Kanaltyp, der im Uplink UL und Downlink DL wie bereits erwähnt gleich sein kann. Im dritten Oktett geben die Bits 1 bis 4 den Spreizcode an und die Bits 5 bis 8 die Mittambelnummer MA, jeweils im Uplink UL und Downlink DL. Im vierten Oktett sind die Bits 1 bis 8 zur Kennzeichnung der Codegruppe im Uplink UL bzw. Downlink DL gesetzt und die Bits des fünften Oktettes bezeichnen die Frequenz der Kanäle im Uplink UL und im Downlink DL. Damit ist jeder Kanal eindeutig charakterisiert.

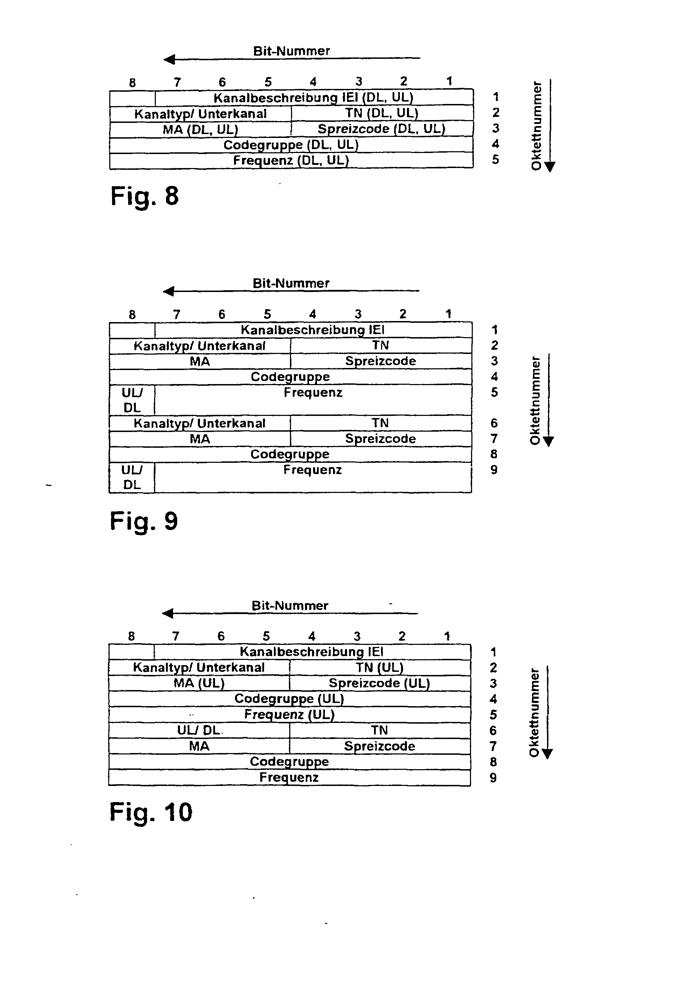

Für den Fall, daß sich ein Uplink-Kanal und ein Downlink-Kanal zum Beispiel nur durch eine Zeitschlitznummer unterscheiden, läßt sich eine Kanalbeschreibung auch durch nur ein Informationselement IEI(DL_UL) realisieren. Dabei wird durch das Informationselement IEI(DL_UL) festgelegt, daß Downlink DL und Uplink UL sich durch 8 Zeitschlitze TN unterscheiden und ansonsten die Parameter des Downlink DL und Uplink UL identisch sind. In Fig. 8 ist ein derartiges Informationselement IEI(DL_UL) dargestellt.

Eine andere Lösung besteht darin, daß ebenfalls nur ein Informationselement IEI der Kanalbeschreibung hinzugefügt wird und Flags im 8. Bit im 5. und 9. Oktett markieren, welche Beschreibung für den Uplink-Kanal UL und welche für den Downlink-Kanal DL gilt. Ein Beispiel hierfür zeigt Fig. 9.

Eine weitere Variante sieht vor, festzulegen, daß die erste Kanalbeschreibung bespielsweise den Uplink-Kanal UL betrifft und weitere Parameter den Downlink-Kanal DL beschreiben. Eine derartige Kanalbeschreibung gibt das Informationselement IEI nach Fig. 10 an.

Bei einer Multicarrier Basisstation und einer Multicarrier Teilnehmerstation könnten auch die Frequenzen für Uplink UL und Downlink DL unterschiedlich sein, zum Beispiel:

| Uplink | Kanaltyp | Vollraten-Verkehrskanal, Sprache |
|---|---|---|
| | Zeitschlitz | 15 |
| | Codegruppe | 3 |
| | Spreizcode | 10 |
| | Mittambel | 7 |
| | Frequenz | 5 |

| Downlink | Kanaltyp | Vollraten-Verkehrskanal, Sprache |
|---|---|---|
| | Zeitschlitz | 10 |
| | Codegruppe | 3 |
| | Spreizcode | 7 |
| | Mittambel | 4 |
| | Frequenz | 3. |

Neben Sprachdiensten gibt es auch Datendienste, die höheroder niederratig sein können. Im Falle eines Echtzeit-Dienstes müssen für den Uplink-Kanal und den Downlink-Kanal die gleiche Anzahl von Ressourcen zur Verfügung gestellt werden. Beim Echtzeit-Dienst 144 kbit/s werden in jeder Richtung 4 Kanale benötigt. Dabei können alle Kanäle fast die gleichen Parameter mit Ausnahme des Spreizcodes besitzen. Natürlich können auch mehrere Parameter unterschiedlich sein.

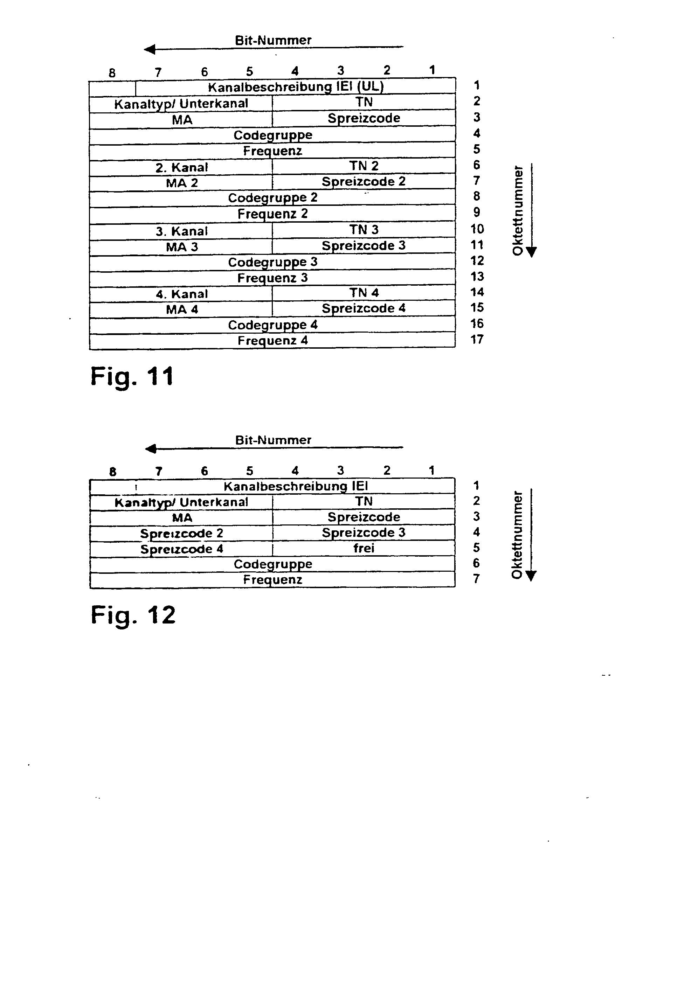

Eine allgemeine Darstellung für eine Kanalbeschreibung für den Uplink-Kanal UL für einen Echtzeit-Dienst 144 kbit/s könnte beispielsweise entsprechend einem Informationselement IEI(UL) nach Fig. 11 aussehen. Hierbei ist festzuhalten, daß in der Kanalbeschreibung eindeutig festzulegen ist, in welcher Reihenfolge die Kanäle 1 bis 4 benutzt werden sollen, falls in einer Richtung mehr als ein physikalischer Kanal zur Verfügung gestellt wird.

Ferner besteht die Möglichkeit, mit einem Informationselement IEI(UL) eine verkürzte Kanalbeschreibung nach Fig. 12 anzugeben, falls sich die 4 Uplink-Kanäle nur im Spreizcode unterscheiden und demzufolge die Reihenfolge der Kanalbenutzung durch die Angabe des Spreizcodes festgelegt ist. Die Reihenfolge gibt auch an, in welcher Reihenfolge die Daten übertragen werden. Diese Angabe ist besonders bei höherratigen Daten bedeutsam. Es gibt eine sogenannte Prioritätenliste.

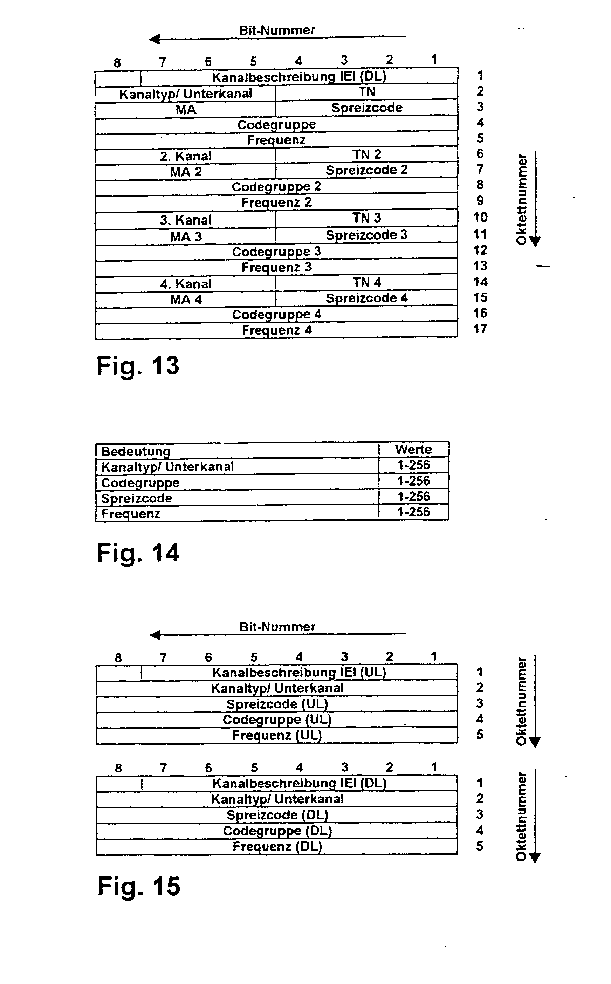

Für den zugeordneten Downlink-Kanal DL könnte die Kanalbeschreibung dagegen allgemeiner Natur sein. Ein Beispiel hierzu zeigt das Informationselement IEI(DL) nach Fig. 13.

Wie bereits dargelegt wurde, haben durch Nutzung von TDD im Paired-Band nicht mehr alle Uplink-Frequenzkanäle und Down-link-Frequenzkanäle einen festen Duplexabstand zueinander. Aus diesem Grunde werden nach einer weiteren Ausprägung der Erfindung im FDD-Modus der Uplink-Kanal UL und Downlink-Kanal DL ebenfalls eindeutig in einer Kanalbeschreibung festgelegt. Wie im TDD-Modus können zum Beispiel für jeden Frequenzkanal Informationselemente zusätzlich eingerichtet werden oder die Beschreibung des einen Frequenzkanals wird in die Beschreibung des anderen Frequenzkanals aufgenommen. Selbstverständlich sind auch Rückgriffe auf weitere bereits angegebene Varianten möglich, beispielsweise auf die Verwendung eines Flags.

Ein Beispiel hierfür ist nachstehend angegeben:

| Uplink | Kanaltyp | Sprache/Daten (Dienst 1, Dienst2 usw.) |
|---|---|---|
| | Spreizcode | 10 |
| | Codegruppe | 10 |
| | Frequenz | 3 |

| Downlink | Kanaltyp | Sprache/Daten (Dienst 1, Dienst 2 usw.) |
|---|---|---|
| | Spreizcode | 10 |
| | Codegruppe | 11 |
| | Frequenz | 5. |

Ein Kanal im FDD-Modus wird gemäß Fig. 14 durch die Parameter: Typ des logischen Kanals/Unterkanals, Codegruppe, Spreizcode und Frequenz als spezifischer physikalischer Kanal charakterisiert. Die Informationselemente für einen Uplink-Kanal IEI(UL) und einen Downlink-Kanal IEI(DL) sind beispielhaft in Fig. 15 angegeben.

Nach einer weiteren Variante läßt sich die Kanalbeschreibung für die FDD-Kanäle auch in einem einzigen Informationselement IEI kombinieren:

| Uplink | Kanaltyp | Sprache/Daten (Dienst 1, Dienst 2 usw.) |
|---|---|---|
| | Spreizcode | 10 |
| | Codegruppe | 10 |
| | Frequenz | 3 |

| Downlink | Kanaltyp | Sprache/Daten (Dienst 1, Dienst 2 usw.) |
|---|---|---|
| | Spreizcode | 10 |
| | Codegruppe | 11 |
| | Frequenz | 5. |

Die Informationselemente IEI für FDD und TDD sowie Uplink und Downlink können unterschiedlich sein.

## Patentansprüche

1. Verfahren zur Kanalzuweisung für eine Funkübertragung zwischen einer Teilnehmerstation und einer Basisstation eines Funkkommunikationssystems,
- bei dem der Teilnehmerstation mehrere Kanalressourcen für die Funkübertragung durch eine an sie übermittelte, gemeinsame Kanalbeschreibung eindeutig zugewiesen werden, wobei die Kanalressourcen wenigstens jeweils unterschiedliche Spreizcodes, unterschiedliche Codegruppen, unterschiedliche Frequenzen oder unterschiedliche Mittambeln aufweisen,
- und bei dem die Kanalbeschreibung Angaben zur Reihenfolge der Nutzung der Kanalressourcen während der Funkübertragung enthält, wodurch die Reihenfolge der Übertragung der Daten angegeben wird.

2. Verfahren nach Anspruch 1,
bei dem die Reihenfolge der Kanalressourcennutzung durch die Reihenfolge der Angaben über die einzelnen Kanalressourcen innerhalb der Kanalbeschreibung angegeben wird.

3. Verfahren nach Anspruch 2,
bei dem die Angabe über die Reihenfolge der Kanalressourcennutzung durch Angaben zu jeweils zugewiesenen Zeitschlitzen, zu jeweils zugewiesene Spreizcodes und/oder zu jeweils zugewiesenen Frequenzen erfolgt.

4. Verfahren nach einem der Ansprüche 1 bis 3,
**dadurch gekennzeichnet,**
**daß** ein Uplink-Kanal (UL) und ein Downlink-Kanal (DL) nacheinander beschrieben werden und eine zusammenhängende Kanalbeschreibung als Nachricht von der Basisstation (BS) an die Teilnehmerstation (MS) gesendet wird.

5. Verfahren nach einem der Ansprüche 1 bis 3,
**dadurch gekennzeichnet,**
**daß** ein Uplink-Kanal (UL) und ein Downlink-Kanal (DL) getrennt beschrieben werden und von der Basisstation (BS) zur Teilnehmerstation (MS) als getrennte Nachrichten gesendet werden.

6. Verfahren nach einem der Ansprüche 1 bis 3,
**dadurch gekennzeichnet,**
**daß** ein Uplink-Kanal (UL) und ein Downlink-Kanal (DL) in einer gemeinsamen Kanalbeschreibung beschrieben werden, die als eine Nachricht gesendet wird, wobei ein Flag anzeigt, welche Beschreibungsteile den Uplink-Kanal (UL) und welche Beschreibungsteile den Downlink-Kanal (DL) betreffen.

7. Verfahren nach einem der vorhergehenden Ansprüche,
**dadurch gekennzeichnet,**
**daß** für den Fall des Wechselns nur eines Kanals, des Downlink-Kanals (DL) oder des Uplink-Kanals (UL), ausschließlich die Beschreibung dieses Kanals (DL/UL) gesendet wird.

8. Basisstation für ein Funkkommunikationssystem
- mit einer Einrichtung zur Kanalzuweisung für eine Funkübertragung mit einer Teilnehmerstation,
- deren Kanalzuweisungseinrichtung zum Übermitteln einer gemeinsamen Kanalbeschreibung an die Teilnehmerstation für die Zuweisung mehrerer Kanalressourcen für die Funkübertragung vorgesehen ist, wobei die Kanalressourcen wenigstens jeweils unterschiedliche Spreizcodes, unterschiedliche Codegruppen, unterschiedliche Frequenzen oder unterschiedliche Mittambeln aufweisen,
- und deren Kanalzuweisungseinrichtung die Kanalbeschreibung in einer Weise erzeugt, dass sie Angaben zur Reihenfolge der Nutzung der Kanalressourcen während der Funkübertragung enthält, wodurch die Reihenfolge der Übertragung der Daten angegeben wird.

## Claims

1. Method for assigning channels for radio transmission between a subscriber station and a base station of a radio communications system,
- in which a number of channel resources are unambiguously assigned to the subscriber station by means of a common channel description transmitted to it for the radio transmission, the channel resources in each case having at least different spread-spectrum codes, different code groups, different frequencies or different midambles,
- and in which the channel description contains information on the order of utilization of the channel resources during the radio transmission, which specifies the order of the transmission of the data.

2. Method according to Claim 1, in which the order of the utilization of the channel resources is specified by the order of the information on the individual channel resources within the channel description.

3. Method according to Claim 2, in which the order of the utilization of the channel resources is specified by information relating to timeslots assigned in each case, to spread-spectrum codes assigned in each case and/or to frequencies assigned in each case.

4. Method according to one of Claims 1 to 3, **characterized in that** an uplink channel (UL) and a downlink channel (DL) are described one after the other and a coherent channel description is sent as a message from the base station (BS) to the subscriber station (MS).

5. Method according to one of Claims 1 to 3, **characterized in that**
an uplink channel (UL) and a downlink channel (DL) are described separately and are sent as separate messages from the base station (BS) to the subscriber station (MS).

6. Method according to one of Claims 1 to 3, **characterized in that** an uplink channel (UL) and a downlink channel (DL) are described in a common channel description which is sent as a message, a flag indicating the parts of the description which relate to the uplink channel (UL) and to the downlink channel (DL).

7. Method according to one of the preceding claims, **characterized in that**, in a case where only one channel is changed, the downlink channel (DL) or the uplink channel (UL), only the description of this channel (DL/UL) is sent.

8. Base station for a radio communications system
- comprising a facility for assigning channels for a radio transmission with a subscriber station,
- the channel assignment facility of which is provided for transmitting a common channel description to the subscriber station for assigning a number of channel resources for the radio transmission, the channel resources having in each case at least different spread-spectrum codes, different code groups, different frequencies or different midambles,
- and the channel assignment facility of which generates the channel description in such a manner that it contains information on the order of utilization of the channel resources during the radio transmission, which specifies the order of transmission of the data.

## Revendications

1. Procédé permettant d'attribuer un canal pour une transmission radio entre une station d'abonné et une station de base d'un système de radiocommunication, dans lequel
- plusieurs ressources de canal sont attribuées univoquement à la station d'abonné pour la transmission radio par une description de canal commune qui lui a été transmise, les ressources de canal présentant au moins respectivement des codes d'étalement différents, des groupes de code différents, des fréquences différentes ou des midambles différents et
- la description de canal contient des indications sur l'ordre d'utilisation des ressources de canal pendant la transmission radio, ce par quoi est indiqué l'ordre de transmission des données.

2. Procédé selon la revendication 1, dans lequel l'ordre d'utilisation des ressources de canal est indiqué par l'ordre des indications concernant les différentes ressources de canal, à l'intérieur de la description de canal.

3. Procédé selon la revendication 2, dans lequel l'indication concernant l'ordre d'utilisation des ressources de canal se fait par des indications concernant des créneaux temporels respectivement attribués, des codes d'étalement respectivement attribués et/ou des fréquences respectivement attribuées.

4. Procédé selon l'une des revendications 1 à 3, **caractérisé en ce qu'**un canal montant (UL) et un canal descendant (DL) sont décrits l'un à la suite de l'autre et **en ce qu'**une description de canal cohérente est envoyée en tant que message par la station de base (BS) à la station d'abonné (MS).

5. Procédé selon l'une des revendications 1 à 3, **caractérisé en ce qu'**un canal montant (UL) et un canal descendant (DL) sont décrits séparément et sont envoyés, en tant que messages séparés, par la station de base (BS) à la station d'abonné (MS).

6. Procédé selon l'une des revendications 1 à 3, **caractérisé en ce qu'**un canal montant (UL) et un canal descendant (DL) sont décrits dans une description de canal commune, laquelle est émise en tant que message, un indicateur (flag) indiquant quelles sont les parties de la description qui concernent le canal montant (UL) et quelles sont les parties de la description qui concernent le canal descendant (DL).

7. Procédé selon l'une des revendications précédentes, **caractérisé en ce que**, pour le cas du changement d'un seul canal, du canal descendant (DL) ou du canal montant (UL), c'est exclusivement la description de ce canal (DL/UL) qui est émise.

8. Station de base pour un système de radiocommunication,
- comprenant un dispositif pour attribuer un canal pour une transmission radio avec une station d'abonné,
- dont le dispositif d'attribution de canal est prévu pour transmettre une description de canal commune à la station d'abonné pour l'attribution de plusieurs ressources de canal pour la transmission radio, les ressources de canal présentant au moins respectivement des codes d'étalement différents, des groupes de code différents, des fréquences différentes ou des midambles différents et
- dont le dispositif d'attribution de canal produit la description de canal d'une manière telle qu'elle contient des indications sur l'ordre d'utilisation des ressources de canal pendant la transmission radio, ce par quoi est indiqué l'ordre de transmission des données.
